# EUROPEAN PATENT SPECIFICATION

(11) **EP 4 186 958 B1**
(45) Date of publication and mention of the grant of the patent: **29.04.2026**
(21) Application number: 21845911.3
(22) Date of filing: 23.06.2021
(51) Int. Cl.: C09K 5/04

(54) **COMPOSITION CONTAINING FLUOROHYDROCARBON AND PREPARATION METHOD THEREFOR**
FLUORKOHLENWASSERSTOFF ENTHALTENDE ZUSAMMENSETZUNG UND VERFAHREN ZU IHRER HERSTELLUNG
COMPOSITION CONTENANT UN FLUOROHYDROCARBURE ET PROCÉDÉ DE PRÉPARATION ASSOCIÉ

(30) Priority: 21.07.2020 CN 202010704558
(43) Date of publication of application: 31.05.2023
(73) Proprietor: Zhejiang Quhua Fluor-Chemistry Co Ltd, Quzhou, Zhejiang 324004 (CN)
(72) Inventor: ZHOU, Liyang, Quzhou, Zhejiang 324000 (CN); HONG, Jiangyong, Quzhou, Zhejiang 324000 (CN); YANG, Bo, Quzhou, Zhejiang 324000 (CN); YU, Huimei, Quzhou, Zhejiang 324004 (CN); ZHANG, Yan, Quzhou, Zhejiang 324000 (CN); ZHAO, Yang, Quzhou, Zhejiang 324000 (CN); GONG, Haitao, Quzhou, Zhejiang 324000 (CN)
(74) Representative: Becker, Eberhard
(86) International application number: PCT/CN2021/101731
(87) International publication number: WO 2022/017109

(56) References cited:
- CN-A- 101 124 288
- CN-A- 104 105 775
- CN-A- 106 350 017
- CN-A- 110 257 014
- CN-A- 110 699 042
- CN-A- 110 699 043
- CN-A- 111 944 489
- US-A1- 2008 121 837

## Description

### BACKGROUND OF THE INVENTION

### Technical Field

The present disclosure relates to the field of refrigerants, in particular to a composition containing fluorohydrocarbons and a preparation method thereof.

### Related Art

At present, hydrofluorocarbons (HFCs) refrigerants, which are widely used in refrigeration and air conditioning industry, are facing severe reduction plans due to a quite very high global warming potential (GWP). Meanwhile, the European Union has passed the fluorine-containing greenhouse gas control regulations. Since January 1, 2017, automobile air-conditioning refrigerants should have a GWP not higher than 150; refrigerants for commercial refrigerators and freezing equipment should have a GWP not higher than 2500 from January 1, 2020, and not higher than 150 from January 1, 2022; and refrigerants used in mobile indoor air-conditioning equipment should have a GWP not higher than 150 from January 1, 2020, etc.

The refrigerants used in air-conditioning equipment in markets of China still depend on some HFCs with a high GWP or mixture products of the HFCs, such as a refrigerant R404A with a GWP higher than or equal to 2500, and refrigerants R407C and R410A with a GWP higher than or equal to 150. Since 2020, such refrigerators and air-conditioning equipment will be successively banned from entering the European Union markets, which will undoubtedly have a great impact on the export of equipment such as air conditioners in China.

Fluids based on fluorocarbons compound are widely used in systems that transfer heat through vapor compression, especially in systems such as air conditioners, heat pumps, refrigerating or freezing devices. These devices have a common feature that they are all based on a thermodynamic cycle. The thermodynamic cycle includes evaporation of the fluids (in which the fluids absorb heat) at a low pressure; compression of the evaporated fluids to a high pressure; condensation of the evaporated fluids at the high pressure to obtain liquid (in which the fluids emit heat); and expansion of the fluids to finish the cycle.

The selection of a heat transfer fluid depends on thermodynamic properties of the fluid, and on the other hand depends on other constraints, especially the influences of the fluid considered on the environment as an important standard. Particularly, chlorinated compounds (chlorofluorocarbons and hydrochloroflurocarbon) show a disadvantage of destroying the ozone layer. Therefore, non-chlorinated compounds, such as hydrofluorocarbons, fluoroethers and fluoroolefins, are generally preferred.

For example, Chinese Patent Publication No. CN101851490A discloses a refrigerant composition which can be used for replacing R134a and consists of 2,3,3,3-tetrafluoropropene, trans-1,3,3,3-tetrafluoropropene (HFO-1234ze (E)) and 1,1-difluoroethane (R152a).

For example, Chinese patent publication CN101864277A discloses a mixture composed of 2,3,3,3-tetrafluoropropene, 1,1-difluoroethane and dimethyl ether (DME).

For example, Chinese patent publication CN102066518A discloses a mixture composed of 2,3,3,3-tetrafluoropropene, 1,1,1,2-tetrafluoroethane and 1,1-difluoroethane.

For example, Chinese patent publication CN102083935A discloses a mixture composed of 2,3,3,3-tetrafluoropropene and 1,1,1,2-tetrafluoroethane.

The refrigerant compositions disclosed in the above patents have disadvantages such as a high GWP, or inability to be directly filled and applied to refrigeration systems, or a high flammability, or inability to use mineral oil, etc. Therefore, it is necessary to develop new refrigerants with a better refrigeration performance, a better compatibility with existing systems and a better environmental protection performance.

US 2008/121837 A1 relates to compositions containing fluorine substituted olefins, which are heat transfer compositions including a first component having difluoromethane (R-32), and at least one second component selected from group consisting of CF3I, 1,2,3,3,3-pentafluoropropene (HFO 1225ye). CN 110699043 A relates to an environment-friendly mixed refrigerant, including the following components, in percentages by mass: 1%-90% of a first component, 1%-90% of a second component, 1%-90% of a third component and 1%-97% of a fourth component, wherein the first component is trifluoroiodomethane, the second component is at least one selected from 1,1,1,2-tetrafluoroethane and pentafluoroethane, the third component is at least one selected from trans-1,3,3,3-tetrafluoropropene, 2,3,3,3-tetrafluoropropene and difluoromethane, and the fourth component is at least selected from1,1-difluoroethane, monofluoroethane, propylene, propane, dimethyl ether and isobutane.

### SUMMARY OF INVENTION

The invention is set out in the appended set of claims. The following disclosure serves a better understanding of the present invention. To overcome the shortcomings of the prior art, the present disclosure provides a composition containing fluorohydrocarbons and a preparation method thereof, and the composition has a low GWP, environmental friendliness, a good refrigeration effect and a good compatibility with lubricants.

To realize the above purpose, the present disclosure adopts the following solutions: A composition containing fluorohydrocarbons includes the following components in parts by weight.

2,3,3,3-tetrafluoropropene is 30-80 parts.

1,1,1,2-tetrafluoroethane is 5-50 parts.

Difluoromethane is 5-30 parts.

1,3,3,3-tetrafluoropropene is 5-25 parts.

Fluoroethane is 5-10 parts.

Flame retardant is 0.1-1 part. The flame retardant is at least one selected from polyvinyl chloride and diethyl ethylphosphonate.

Preferably, the composition includes the following components in parts by weight.

2,3,3,3-tetrafluoropropene is 50-80 parts.

1,1,1,2-tetrafluoroethane is 15-30 parts.

Difluoromethane is 5-20 parts.

1,3,3,3-tetrafluoropropene is 5-10 parts.

Fluoroethane 5-10 parts.

Flame retardant is 0.5-1 part.

Preferably, the 1,3,3,3-tetrafluoropropene is trans-1,3,3,3-tetrafluoropropene.

Preferably, the composition has a global warming potential (GWP) not higher than 750.

More preferably, the composition has a global warming potential (GWP) not higher than 500.

Most preferably, the composition has a global warming potential (GWP) not higher than 150.

The present disclosure further discloses a preparation method of the composition containing fluorohydrocarbons. The components are physically mixed in a liquid phase state according to weight percentages thereof to obtain the composition.

The composition containing fluorohydrocarbons of the present disclosure has good compatibility, a good stability under the above-mentioned weight percentages, a good fluidity of the composition, and the capability of lowering a working pressure of a compressor.

The compatibility of a lubricant plays a quite important role in many applications, and the lubricant should be fully dissolved in a refrigerating liquid at various operation temperatures. The composition containing fluorohydrocarbons of the present disclosure has good compatibility with lubricants which can be selected from mineral oil, silicone oil, polyalkylbenzene (PAB), polyol ester (POE), polyalkylene glycol (PAG), and polyvinyl ether (PVE).

For many applications, flammability is another important characteristic of refrigerant compositions. When refrigerant compositions are used in more potential application systems, it is necessary to consider the use safety of the compositions. With the addition of a flame retardant, the flammability of the composition containing fluorohydrocarbons of the present disclosure is effectively reduced. The flame retardant in the composition of the present disclosure is polyvinyl chloride, diethyl ethylphosphonate and a mixture thereof.

The composition containing fluorohydrocarbons includes HFO-1234yf as a main component and is added with other components to improve the refrigeration effect, improve the compatibility with lubricating oil and also lower the GWP and the flammability.

The HFO-1234yf of the present disclosure has a good thermodynamic performance. As a single refrigerant, the HFO-1234yf has excellent environmental parameters, a global warming potential of 0 (GWP=0), a lower life cycle climate performance (LCCP) than R134a, and same atmospheric decomposition products as R134a. Under the same automobile air conditioning conditions, the HFO-1234yf has a lower refrigeration coefficient as well as a lower refrigeration capacity per unit volume than R134a, but has a quite low discharge temperature and also has a quite large specific volume of saturation liquid.

The HFO-1234ze (E) in the composition of the present disclosure has excellent environmental parameters, a GWP of 1 (GWP=1), a lower life cycle climate performance (LCCP) than R134a, same atmospheric decomposition products as R134a, and a system performance better than R134a, so it is considered as a substitute with potential to replace R134a in the refrigerant industry and the like.

The R161 of the present disclosure has excellent environmental parameters, a lower life cycle climate performance (LCCP) than R134a, an ozone depletion potential (ODP) of 0, a GWP of 4 (GWP=4) and a good cycle performance, and can adapt to different working conditions and different temperature ranges. However, as a pure working medium, the application of the R161 as a working fluid in refrigeration and air conditioning systems is limited by its flammability.

The composition containing fluorohydrocarbons of the present disclosure combines the advantages of all the components. By synergistic action of all the components, unfavorable factors are reduced to the greatest extent, such that the GWP of the composition is greatly lowered, the ODP of each component is zero, and no damage will be caused to the ozone layer even after a long-term use. Therefore, the composition containing fluorohydrocarbons of the present disclosure has the advantages of a low GWP, environmental friendliness, a good refrigeration effect and a good compatibility with lubricants, and can meet various use requirements. requirements.

All the raw materials of the composition of the present disclosure are commercially available.

Compared with the prior art, the present disclosure has the following advantages.
1. The composition containing fluorohydrocarbons of the present disclosure has an ODP of 0, a low GWP and an excellent environmental performance.
2. The composition containing fluorohydrocarbons of the present disclosure has a low discharge temperature, can significantly prolong the service life of the compressor and improves the reliability of the refrigeration equipment.
3. The composition containing fluorohydrocarbons of the present disclosure has good compatibility with lubricating oil and a higher stability.
4. The composition containing fluorohydrocarbons of the present disclosure can be used for directly replacing R134A without replacing the compressor.
5. The composition containing fluorohydrocarbons of the present disclosure has good cycle performance and flame-retardant property.

### DESCRIPTION OF EMBODIMENTS

The present disclosure will be further described below in conjunction with specific examples, but is not limited by the examples.

Global Warming Potential (GWP) is a relative measure of how much heat a gas retains in the atmosphere. The GWP is expressed relative to carbon dioxide over 100 years. The GWP is calculated based on instructions provided by the 5th report of the Intergovernmental Panel on Climate Change (IPCC).

Basic parameters of some substances in the examples are shown in Table 1.

**Table 1 Basic parameters of some substances in examples.**

| Single working medium | Name | Chemical formula | Molec ular weight g/mol | Stand ard boilin g point °C | Criti cal temp eratu re °C | Critic al press ure MPa | ODP | GWP |
|---|---|---|---|---|---|---|---|---|
| HFO-1234 yf | 2,3,3,3-tet rafluoropr opene | CH₂=CFCF₃ | 114.04 | -29.5 | 94.7 | 3.38 | 0 | 0 |
| HFO-1234 ze(E) | trans-1,3,3 ,3-tetraflu oropropen e | CHF=CHCF₃ | 114.04 | -18.9 | 109.4 | 3.64 | 0 | 1 |
| R32 | difluorom ethane | CH₂F₂ | 52.02 | -51.6 | 78.1 | 5.78 | 0 | 677 |
| R134a | 1,1,1,2-tet rafluoroet hane | CH₂FCF₃ | 102.03 | -26.1 | 101.1 | 4.06 | 0 | 1300 |
| R161 | fluoroetha ne | CH₂FCH₃ | 48.06 | -37.6 | 102.2 | 5.1 | 0 | 4 |

In the following examples, each part of the components is calculated as 1 kg.

### Example 1

80 kg of 2,3,3,3-tetrafluoropropene, 5 kg of 1,1,1,2-tetrafluoroethane, 5 kg of trans-1,3,3,3-tetrafluoropropene, 5 kg of difluoromethane, 5 kg of fluoroethane and 0.1 kg of polyvinyl chloride were physically mixed in a liquid phase state to obtain a 1# composition with a GWP shown in Table 2.

### Example 2

70 kg of 2,3,3,3-tetrafluoropropene, 10 kg of 1,1,1,2-tetrafluoroethane, 10 kg of trans-1,3,3,3-tetrafluoropropene, 5 kg of difluoromethane, 5 kg of fluoroethane and 0.5 kg of diethyl ethylphosphonate were physically mixed in a liquid phase state to obtain a 2# composition with a GWP shown in Table 2.

### Example 3 (is not being part of the invention and merely illustrated for better understanding)

65 kg of 2,3,3,3-tetrafluoropropene, 15 kg of 1,1,1,2-tetrafluoroethane, 5 kg of trans-1,3,3,3-tetrafluoropropene, 10 kg of difluoromethane, 5 kg of fluoroethane and 0.3 kg of trifluoroiodomethane were physically mixed in a liquid phase state to obtain a 3# composition with a GWP shown in Table 2.

### Example 4 (is not being part of the invention and merely illustrated for better understanding)

50 kg of 2,3,3,3-tetrafluoropropene, 30 kg of 1,1,1,2-tetrafluoroethane, 5 kg of trans-1,3,3,3-tetrafluoropropene, 5 kg of difluoromethane, 10 kg of fluoroethane, 0.2 kg of polyvinyl chloride and 0.3 kg of trifluoroiodomethane were physically mixed in a liquid phase state to obtain a 4# composition with a GWP shown in Table 2.

### Example 5

35 kg of 2,3,3,3-tetrafluoropropene, 50 kg of 1,1,1,2-tetrafluoroethane, 5 kg of trans-1,3,3,3-tetrafluoropropene, 5 kg of difluoromethane, 5 kg of fluoroethane, 0.3 kg of polyvinyl chloride and 0.4 kg of diethyl ethylphosphonate were physically mixed in a liquid phase state to obtain a 5# composition with a GWP shown in Table 2.

### Example 6 (is not being part of the invention and merely illustrated for better understanding)

30 kg of 2,3,3,3-tetrafluoropropene, 12 kg of 1,1,1,2-tetrafluoroethane, 20 kg of trans-1,3,3,3-tetrafluoropropene, 30 kg of difluoromethane, 8 kg of fluoroethane, 0.6 kg of polyvinyl chloride and 0.4 kg of trifluoroiodomethane were physically mixed in a liquid phase state to obtain a 6# composition with a GWP shown in Table 2.

### Example 7

35 kg of 2,3,3,3-tetrafluoropropene, 20 kg of 1,1,1,2-tetrafluoroethane, 23 kg of trans-1,3,3,3-tetrafluoropropene, 15 kg of difluoromethane, 7 kg of fluoroethane, 0.4 kg of polyvinyl chloride and 0.4 kg of diethyl ethylphosphonate were physically mixed in a liquid phase state to obtain a 7# composition with a GWP shown in Table 2.

### Example 8 (is not being part of the invention and merely illustrated for better understanding)

60 kg of 2,3,3,3-tetrafluoropropene, 18 kg of 1,1,1,2-tetrafluoroethane, 7 kg of trans-1,3,3,3-tetrafluoropropene, 7 kg of difluoromethane, 8 kg of fluoroethane, 0.4 kg of polyvinyl chloride, 0.4 kg of diethyl ethylphosphonate and 0.4 kg of trifluoroiodomethane were physically mixed in a liquid phase state to obtain an 8# composition with a GWP shown in Table 2.

**Table 2 is GWP of compositions obtained in Examples 1-8.**

| Examples | No. of Compositions | GWP |
|---|---|---|
| 1 | 1# | 99.1 |
| 2 | 2# | 164.2 |
| 3 | 3# | 262.8 |
| 4 | 4# | 424.3 |
| 5 | 5# | 684.1 |
| 6 | 6# | 359.6 |
| 7 | 7# | 362.1 |
| 8 | 8# | 281.8 |

### Performance tests

### (1) Relative COP, relative capacity, and discharge temperature tests

An inlet temperature of the compressor was set as 50°C; the COP, the relative capacity and the discharge temperature of each substance were tested within a temperature range of a condenser and an evaporator, and results are shown in Table 3.

**Table 3 is performance of compositions obtained in Examples 1-8.**

| Tested substances | Relative COP | Relative capacity | Discharge temperature |
|---|---|---|---|
| R134a | 1.00 | 1.00 | 175 |
| HFO-1234yf | 0.98 | 1.10 | 168 |
| HFO-1234ze(E) | 1.04 | 0.70 | 165 |
| 1# composition | 1.03 | 1.11 | 158 |
| 2# composition | 1.10 | 1.03 | 163 |
| 3# composition | 1.08 | 1.07 | 160 |
| 4# composition | 1.04 | 1.02 | 165 |
| 5# composition | 1.07 | 1.03 | 162 |
| 6# composition | 1.12 | 1.05 | 161 |
| 7# composition | 1.09 | 1.12 | 160 |
| 8# composition | 1.08 | 1.06 | 164 |

It can be seen from Table 3 that the composition of the present disclosure has a higher energy efficiency than R134a, and the compressor using the composition of the present disclosure has a lower discharge temperature than R134a.

### (2) Compatibility test

Lubricants for the test were mineral oil, silicone oil, polyalkylbenzene (PAB), polyalkylene glycol (PAG), polyol ester (POE), and polyvinyl ether (PVE). In the test, two lubricants were mixed according to a weight percentage of 50% and mixed with the tested substances.

A tested substance/lubricant composition was added to a small-size compressor, and made contact with a metal used in a refrigeration system at 40°C to test the compatibility of the tested substances with the lubricants. It was determined that the tested substances and the lubricants could be compatibly mixed with each other at any test ratio within the overall temperature range. The tested substance/lubricant composition is as follows.
(a) HFO-1234ze(E) and mineral oil/silicone oil
(b) HFO-1234yf and PAG/silicone oil
(c) 1# composition and PAB/silicone oil
(d) 2# composition and PAG/POE
(e) 3# composition and PAG/PAB
(f) 4# composition and silicone oil/PAB
(g) 5# composition and PVE/silicone oil
(h) 6# composition and mineral oil/silicone oil
(i) 7# composition and mineral oil/PVE
(j) 8# composition and PAG/POE

It was found in the test that the composition of the present disclosure has a higher stability when in contact with the lubricant in the refrigeration system of the compressor.

### (3) Combustibility test

A combustibility test was performed according to American ASTM-E681-01 standards, where LFL represented a lower combustion limit value, and the higher the LFL, the lower the combustibility. Results are shown in Table 4.

**Table 4 is combustibility comparison of compositions.**

| Tested substances | 1# comp ositio n | 2# comp ositio n | 3# comp ositio n | 4# comp ositio n | 5# comp ositio n | 6# comp ositio n | 7# comp ositio n | 8# compo sition | HFO-12 34yf |
|---|---|---|---|---|---|---|---|---|---|
| LFL (volume% ) | 6.75 | 6.52 | 6.40 | 6.28 | 6.5 | 6.45 | 6.52 | 6.65 | 6.20 |

## Claims

1. A composition containing fluorohydrocarbons, **characterized in that**, comprising the following components in parts by weight:
30-80 parts of 2,3,3,3-tetrafluoropropene,
5-50 parts of 1,1,1,2-tetrafluoroethane,
5-30 parts of difluoromethane,
5-25 parts of 1,3,3,3-tetrafluoropropene,
5-10 parts of fluoroethane, and
0.1-1 part of a flame retardant, wherein the flame retardant is at least one selected from polyvinyl chloride and diethyl ethylphosphonate.

2. The composition containing fluorohydrocarbons according to Claim 1, **characterized in that**, the composition comprises the following components in parts by weight:
50-80 parts of 2,3,3,3-tetrafluoropropene,
15-30 parts of 1,1,1,2-tetrafluoroethane,
5-20 parts of difluoromethane,
5-10 parts of 1,3,3,3-tetrafluoropropene,
5-10 parts of fluoroethane, and
0.5-1 part of the flame retardant.

3. The composition containing fluorohydrocarbons according to Claim 1 or 2, **characterized in that**, the 1,3,3,3-tetrafluoropropene is trans-1,3,3,3-tetrafluoropropene.

4. The composition containing fluorohydrocarbons according to Claim 1 or 2, **characterized in that**, the composition has a global warming potential not higher than 750.

5. The composition containing fluorohydrocarbons according to Claim 1 or 2, **characterized in that**, the composition has a global warming potential not higher than 500.

6. The composition containing fluorohydrocarbons according to Claim 1 or 2, **characterized in that**, the composition has a global warming potential not higher than 150.

7. Method to obtain a composition according to Claim 1 or 2, **characterized in that**, the components are physically mixed in a liquid phase state according to weight percentages thereof.

## Patentansprüche

1. Zusammensetzung enthaltend Fluorkohlenwasserstoffe, **dadurch gekennzeichnet, dass** sie die folgenden Bestandteile in Gewichtsteilen umfasst:
30-80 Teile 2,3,3,3-Tetrafluorpropen,
5-50 Teile 1,1,1,2-Tetrafluorethan,
5-30 Teile Difluormethan,
5-25 Teile 1,3,3,3-Tetrafluorpropen,
5-10 Teile Fluorethan und
0,1-1 Teil eines Flammschutzmittels, wobei das Flammschutzmittel mindestens eines ist, ausgewählt aus Polyvinylchlorid und Diethylethylphosphonat.

2. Zusammensetzung enthaltend Fluorkohlenwasserstoffe nach Anspruch 1, **dadurch gekennzeichnet, dass** die Zusammensetzung die folgenden Komponenten in Gewichtsteilen umfasst:
50-80 Teile 2,3,3,3-Tetrafluorpropen,
15-30 Teile 1,1,1,2-Tetrafluorethan,
5-20 Teile Difluormethan,
5-10 Teile 1,3,3,3-Tetrafluorpropen,
5-10 Teile Fluorethan und
0,5-1 Teil des Flammschutzmittels.

3. Zusammensetzung enthaltend Fluorkohlenwasserstoffe nach Anspruch 1 oder 2, **dadurch gekennzeichnet, dass** das 1,3,3,3-Tetrafluorpropen trans-1,3,3,3-Tetrafluorpropen ist.

4. Zusammensetzung enthaltend Fluorkohlenwasserstoffe nach Anspruch 1 oder 2, **dadurch gekennzeichnet, dass** die Zusammensetzung ein Treibhauspotenzial von nicht mehr als 750 aufweist.

5. Zusammensetzung enthaltend Fluorkohlenwasserstoffe nach Anspruch 1 oder 2, **dadurch gekennzeichnet, dass** die Zusammensetzung ein Treibhauspotenzial von nicht mehr als 500 aufweist.

6. Zusammensetzung enthaltend Fluorkohlenwasserstoffe nach Anspruch 1 oder 2, **dadurch gekennzeichnet, dass** die Zusammensetzung ein Treibhauspotenzial von nicht mehr als 150 aufweist.

7. Verfahren zur Herstellung einer Zusammensetzung nach Anspruch 1 oder 2, **dadurch gekennzeichnet, dass** die Komponenten in einer flüssigen Phase gemäß deren Gewichtsprozentsätzen physikalisch gemischt werden.

## Revendications

1. Composition contenant des hydrocarbures fluorés, **caractérisée en ce qu'**elle comprend les composants suivants en parties en poids :
30 à 80 parties de 2,3,3,3-tétrafluoropropène,
5 à 50 parties de 1,1,1,2-tétrafluoroéthane,
5 à 30 parties de difluorométhane,
5 à 25 parties de 1,3,3,3-tétrafluoropropène,
5 à 10 parties de fluoroéthane, et
0,1 à 1 partie d'un retardateur de flamme, dans laquelle le retardateur de flamme est au moins un composé choisi parmi le chlorure de polyvinyle et l'éthylphosphonate de diéthyle.

2. Composition contenant des hydrocarbures fluorés selon la revendication 1, **caractérisée en ce que** la composition comprend les composants suivants en parties en poids :
50 à 80 parties de 2,3,3,3-tétrafluoropropène,
15 à 30 parties de 1,1,1,2-tétrafluoroéthane,
5 à 20 parties de difluorométhane,
5 à 10 parties de 1,3,3,3-tétrafluoropropène,
5 à 10 parties de fluoroéthane, et
0,5 à 1 partie de retardateur de flamme.

3. Composition contenant des hydrocarbures fluorés selon la revendication 1 ou 2, **caractérisée en ce que** le 1,3,3,3-tétrafluoropropène est du trans-1,3,3,3-tétrafluoropropène.

4. Composition contenant des hydrocarbures fluorés selon la revendication 1 ou 2, **caractérisée en ce que** la composition présente un potentiel de réchauffement global ne dépassant pas 750.

5. Composition contenant des hydrocarbures fluorés selon la revendication 1 ou 2, **caractérisée en ce que** la composition présente un potentiel de réchauffement global ne dépassant pas 500.

6. Composition contenant des hydrocarbures fluorés selon la revendication 1 ou 2, **caractérisée en ce que** la composition présente un potentiel de réchauffement global ne dépassant pas 150.

7. Procédé pour obtenir une composition selon la revendication 1 ou 2, **caractérisé en ce que** les composants sont mélangés physiquement à l'état liquide dans les proportions indiquées.
